# EUROPÄISCHE PATENTSCHRIFT

(11) **EP 0 455 972 B1**
(45) Veröffentlichungstag und Bekanntmachung des Hinweises auf die Patenterteilung: **25.05.1994**
(21) Anmeldenummer: 91104513.6
(22) Anmeldetag: 22.03.1991
(51) Int. Cl.: F16L 39/02, B60H 1/00

(54) **Vorrichtung zur Unterstützung der gleichzeitigen Herstellung mehrerer parallellaufender fluidischer Steckverbindungen**
Supporting device for the simultaneous coupling of several parallel arranged fluid connectors
Dispositif support pour l'accouplement simultané de plusieurs raccords parallèles pour fluide

(30) Priorität: 08.05.1990 DE 4014666
(43) Veröffentlichungstag der Anmeldung: 13.11.1991
(73) Patentinhaber: MERCEDES-BENZ AG, 70327 Stuttgart (DE)
(72) Erfinder: Feichtiger, Dieter, W-7042 Aidlingen (DE); Eichberger, Bernd, W-7262 Ottenbronn (DE)

(56) Entgegenhaltungen:
- EP-A- 0 003 311
- DE-A- 2 746 921

## Beschreibung

Die Erfindung bezieht sich auf eine Vorrichtung zur Unterstützung der gleichzeitigen Herstellung mehrerer parallellaufender fluidischer Steckverbindungen mit den Merkmalen des Oberbegriffs des Patentanspruchs 1. Eine gattungsgemäße Vorrichtung ist bekannt (DE-A-27 46 921).
Kernstück dieser Vorrichtung ist eine Halteplatte mit kreisrunden Öffnungen und mit einem ebenfalls plattenförmigen Sicherungsschieber, der mit der Halteplatte in der Weise verbunden ist, daß er an ihr um einen geringen Weg linear verschiebbar geführt ist. Er weist Ausnehmungen auf, deren Umriß durch zwei einander überlappende Kreisausschnitte mit unterschiedlichem Durchmesser gebildet wird, wobei die lichte Weite der Ausnehmungen an keiner Stelle kleiner als der Durchmesser des kleineren Kreisausschnittes ist. Die Ausnehmungen haben also etwa den Umriß von in Haus- und Wohnungstüren eingesetzten Schließzylindern, und ihre größte lichte Weite liegt parallel zur Verschieberichtung des Sicherungsschiebers.
In dessen erster Endstellung fluchten die größeren Kreisausschnitte seiner Ausnehmungen mit den Öffnungen der Halteplatte, in seiner gegenüberliegenden Endstellung fluchten die kleineren Kreisausschnitte der Ausnehmungen mit denselben Öffnungen. Letztere sind zur Aufnahme einer Vielzahl von Anschlußstücken pneumatischer oder hydraulischer Leitungen vorgesehen, die mit umlaufenden Widerlagern in Form von Ringnuten versehen sind und bis zu einem Anschlag in die Öffnungen eingeschoben werden können, wenn der Sicherungsschieber in der besagten ersten Endstellung steht. Dabei haben die Anschlußstücke in den Öffnungen geringes radiales Spiel. Wenn nun der Sicherungsschieber in die erwähnte zweite Endstellung gebracht wird, so gelangen die Ränder der kleineren Kreisausschnitte seiner Ausnehmungen mit den Nuten der Anschlußstücke in Eingriff, so daß die Anschlußstücke in der Halteplatte durch den Sicherungsschieber formschlüssig gesichert sind.
Mit dieser Vorrichtung ist ein fluidischer Mehrfachstecker mit in einfacher Weise austauschbaren einzelnen Anschlußstücken herstellbar, der insgesamt mit einem Verteiler oder dergleichen mit einer der Anzahl der gesteckten Leitungen bzw. Anschlußstücke entsprechenden Anschlußanzahl verbunden werden kann. Die Halteplatte zusammen wird mit dem Sicherungsschieber auf den Verteiler geschraubt; ebenso ist der Sicherungsschieber in der Halteplatte in einer längs verlaufenden Vertiefung geführt und wird darin mittels in Langlöchern gleitender Schrauben gehalten.

Der korrekte Einsteckzustand aller Anschlußstücke muß bei der bekannten Vorrichtung vor dem Schieben des Sicherungsschiebers in seine zweite, sichernde Endstellung eigens sichergestellt werden, weil in der Halteplatte selbst keine Rastmöglichkeit oder dergleichen für diese vorgesehen ist.
Außerdem müssen sowohl die Halteplatte als auch der Sicherungsschieber mit genau zu den Anschlußstücken passenden Öffnungen bzw. Ausnehmungen versehen werden, was fertigungstechnisch betrachtet einen relativ hohen Aufwand verursacht.
Auch die Schraubverbindungen zwischen dem Sicherungsschieber und der Halteplatte einerseits und der Halteplatte und dem Verteiler andererseits verlangen beim Zusammenbau einen relativ hohen Zeitaufwand.
Schließlich sind in einer ersten Ausführungsform der bekannten Vorrichtung separat zu handhabende Schraub- oder Steckbolzen zur Sicherung des Sicherungsschiebers in seiner zweiten Endstellung vorgesehen, während die selbsttätig sichernd einrastenden Sicherungselemente einer zweiten Ausführungsform beim Entsichern - zum Austausch oder Ausbau von Anschlußstücken - jeweils einzeln mit einem geeigneten Werkzeug gegen Federkraft in eine Freigabestellung zurückgedrückt werden müssen und darüber hinaus ebenfalls einen hohen Fertigungsaufwand (Paßbohrungen) verursachen.

In einem bekannten fluidischen Mehrfachstecker (DE-A-29 47 855) werden zur Festlegung der Stecknippel zwei parallel angeordnete Haltescheiben mit Durchgangslöchern verwendet. Die Stecknippel werden in die annähernd ausgefluchteten Durchgangslöcher beider Haltescheiben eingesteckt und durch gegenseitiges Verdrehen der Haltescheiben darin formschlüssig festgelegt. Ränder der Durchgangslöcher in den Haltescheiben tauchen dabei in Widerlager der Stecknippel in Gestalt von Umfangsnuten ein, so daß sich in der axialen Projektion eine sichelförmige Überdeckung zwischen den eingetauchten Rändern und der Außenkontur der Stecknippel ergibt. In der festlegenden Stellung werden die Haltescheiben gegeneinander verriegelt.

Bei elektrischen Vielfach-Steckverbindern ist es bekannt (US-A-4,332,432), zur Verbindung der in einem ersten Verbinder-Gehäuseteil fest angeordneten Steckstifte mit entsprechenden Steckbuchsen, die in einem zweiten Verbinder-Gehäuseteil fest angeordnet sind, in oder an einem der Gehäuseteile einen Schieber zu führen, der manuell verschiebbar ist und bei korrekter Relativposition zwischen beiden Gehäuseteilen die einfache und gleichzeitige Herstellung der elektrischen Kontaktierung bewirkt, indem die beiden vorgesteckten bzw. angeschnäbelten Gehäuseteile über schräge Gleitführungen des manuell quer zur Einsteckrichtung bewegten Schiebers aufeinander zu bewegt werden. Bei Umkehrung der Bewegungsrichtung des Schiebers trennt dieser die gesteckte Vielfachsteckverbindung wieder.

Die GB-A-1 442 837 offenbart ebenfalls einen elektrischen Vielfach-Steckverbinder, der mit einem beweglichen Schieber versehen ist. Dieser Schieber unterstützt zwar nicht die Annäherung der beiden Verbinder-Gehäuseteile, sondern dient deren selbsttätiger Verriegelung nach bereits manuell hergestellter elektrischer Kontaktierung. Er ist federnd in seine Verriegelungsstellung vorgespannt, wird während des Fügens der Steckverbindung um einen kurzen Hub gegen die Federkraft bewegt und fällt nach Abschluß des Fügens in seine Verriegelungsstellung ein. Wird er bei gesteckter Verbindung manuell gegen die Federkraft bewegt, so werden die Verbinder-Gehäuseteile mittels schräger Gleitführungen des Schiebers wieder voneinander getrennt.

Bei derartigen elektrischen Vielfach-Steckverbindern ist im allgemeinen der Austausch einzelner Leitungen/Steckerstifte/Steckbuchsen im Gegensatz zum gattungsbildenden Stand der Technik nicht ohne weiteres möglich. Entsprechend sind die dort vorgesehenen Schieber in keiner Weise zur Festlegung elektrischer Anschlußkontakte in den Verbinder-Gehäuseteilen ausgelegt.

Die Erfindung hat die Aufgabe, eine gattungsgemäße Vorrichtung so auszubilden, daß ihre Fertigung sowie wenigstens das Einsetzen und Festlegen der einzelnen Anschlußstücke in der Halteplatte noch weiter vereinfacht wird.

Diese Aufgabe wird mit den kennzeichnenden Merkmalen des Patentanspruchs 1 erfindungsgemäß gelöst.

Durch Realisierung dieser kennzeichnenden Merkmale,
- formschlüssige axiale Fixierung der Anschlußstücke in der Halteplatte mittels eines sich wenigstens über einen begrenzten Umfangsabschnitt jeder Öffnung erstreckenden und zum Eingriff mit den Widerlagern der Anschlußstücke ausgebildeten Randes der unrund ausgebildeten Öffnungen der Halteplatte, wobei dieser Rand ein- und endseitig der größten lichten Weite der unrunden Öffnungen vorgesehen ist, und
- seitliche Festlegung der Anschlußstücke der zu ihrer Einführrichtung innerhalb der unrunden Öffnungen in der Stellung, in welcher ihre Widerlager mit dem Rand in Eingriff stehen, mittels der wenigstens einen, geradlinig parallel zur Schieberichtung ausgeführten und bezüglich des Randes auf der von diesem abgewandten Seite der Anschlußstücke verlaufenden Kontur des Sicherungsschiebers,

können die Anschlußstücke nach ihrem axialen Einführen in den Einführteil innerhalb der jeweiligen unrunden Öffnung gegen einen dabei in Eingriff mit dem Widerlager des jeweiligen Anschlußstücke tretenden Rand der jeweiligen Öffnung geschoben werden, mittels dessen sie dann bereits vorläufig gegen Herausfallen gesichert sind.
Mit dieser Verbesserung beim Einsetzen der Anschlußstücke wird die gleichzeitige Herstellung von parallellaufenden fluidischen Steckverbindungen der Anschlußstücke deutlich besser unterstützt als mit der gattungsbildenden Vorrichtung.
Mit der vereinfachten Form des Sicherungsschiebers ist auch bereits eine einfachere Herstellung der Vorrichtung gewährleistet.

Für die Gestaltung des Randes bzw. für die tatsächliche unrunde Form der Öffnungen sind zunächst keine Festlegungen getroffen; der Rand wird natürlich der Kontur der Widerlager anzupassen sein, kann aber dabei kreisrund, oval oder eckig - z. B. polygonal oder prismatisch - geformt sein, woraus sich eine entsprechende Form der unrunden Öffnung jedenfalls im Bereich dieses Randes ergibt.
Daß es innerhalb einer jeden unrunden Öffnung eines freien Querschnittes bedarf, der ungehindertes axiales Einführen von Anschlußstück und Widerlager erlaubt, ist eine Selbstverständlichkeit, die an sich nicht eigens erwähnt werden müßte.

In Verbindung mit der beschriebenen Fixierung der Anschlußstücke in den Öffnungen wird es möglich, die die Anschlußstücke innerhalb der Öffnungen festlegende Kontur des Sicherungsschiebers einfach geradlinig auszuführen, wobei sie bei dessen Einschieben in der Weise entlang der Reihe von Anschlußstücken geführt wird, daß sie ein seitliches Abgleiten der Widerlager von dem sie jeweils axial festlegenden Rand der Öffnung sicher verhindert.

In bevorzugter Ausführung wird der Rand rund ausgebildet, damit standardisierte Formen von - im wesentlichen zylindrischen - Anschlußstücken verwendet und deren ebenfalls zylindrische Widerlager - insbesondere Ringnuten oder -wülste - auf möglichst großem Umfang im Sinne bestmöglicher axialer Abstützung mit dem Rand in Eingriff treten können.

Hierzu sind gemäß einer vorteilhaften Weiterbildung der erfindungsgemäßen Vorrichtung die Merkmale
- Ausbildung der unrunden Öffnungen der Halteplatte mit einem zur axialen Einführung der Anschlußstücke und der Widerlager vorgesehenen Einführteil mit größerer lichter Weite und einem mit dem Rand mit kleinerer lichter Weite versehenen runden, den Einführteil teilweise überlappenden Halteteil,
- axiale Festlegung der Anschlußstücke im Halteteil der jeweiligen unrunden Öffnung nach ihrem axialen Einführen in den Einführteil,
   wozu die Anschlußstücke quer zu ihrer Einführrichtung und in Richtung der größten lichten Weite der jeweiligen unrunden Öffnung geschoben werden und die Widerlager mit dem Rand des Halteteils in Eingriff gebracht werden,
- winklige Orientierung der größten lichten Weite aller unrunden Öffnungen bezogen auf die Schieberichtung und die wenigstens eine geradlinige Kontur des Sicherungsschiebers, und
- wenigstens teilweise Überdeckung der Einführteile der Öffnungen durch den eingeschobenen Sicherungsschieber,
   wodurch die Anschlußstücke mittels der wenigstens einen geradlinigen Kontur des Sicherungsschiebers in dem jeweiligen Halteteil festgelegt werden,

vorgesehen.

Mit dieser Weiterbildung wird die Unterstützung der gleichzeitigen Herstellung von parallellaufenden fluidischen Steckverbindungen der Anschlußstücke noch weiter verbessert.

Die kennzeichnenden Merkmale der Unteransprüche offenbaren vorteilhafte Weiterbildungen der erfindungsgemäßen Vorrichtung.

In einer Grundversion der erfindungsgemäßen Vorrichtung mit einer einzelnen Reihe von Öffnungen in der Halteplatte kann der Sicherungsschieber sehr einfach etwa linealartig ausgeführt werden, wobei bei seinem Einschieben eine seiner Längskanten die Anschlußstücke festlegt.

Es versteht sich, daß bei dieser und im Rahmen der Erfindung vorgesehenen anderen Formen des Sicherungsschiebers auf dessen definierte Festlegung bezüglich der Halteplatte verzichtet werden kann, weil es zur wirksamen seitlichen Festlegung der Anschlußstücke unerheblich ist, welcher Teil der geradlinigen Kontur des Sicherungsschiebers gerade ein Zurückschieben eines Anschlußstückes in den Einführteil der jeweiligen Öffnung verhindert.

Vorteilhaft kann in jeder Öffnung der Halteplatte eine Engstelle im Übergang zwischen dem Einführteil und dem Halteteil vorgesehen werden, die es ermöglicht, die Anschlußstücke bereits vor dem Einschieben des Sicherungsschiebers in den Halteteil einzurasten.
Dem Sicherungsschieber verbleibt dann zunächst nur eine zusätzliche Sicherungsfunktion, in der er nur ein Zurückführen der Anschlußstücke in den Einführteil unter Einwirkung von Kräften sicher verhindert, ohne daß seine besagte geradlinige Kontur dauernd mit den Anschlußstücken in Kontakt gebracht werden muß oder gar die vorgesehenen Widerlager hintergreifen muß.

Im Zusammenhang mit der erwähnten Schiebe-Beweglichkeit des Sicherungsschiebers auch bei festgelegten Anschlußstücken ergibt sich die Möglichkeit, den Sicherungsschieber ferner zur Befestigung bzw. Verriegelung der Halteplatte und der Anschlußstücke auf einem mit den Anschlußstücken fluidisch zu kontaktierenden Bauteil zu verwenden und ihm insofern eine Doppelfunktion zuzuweisen.

Weitere Einzelheiten und Vorteile gehen aus der Zeichnung von Ausführungsbeispielen und deren sich hier anschließender eingehender Beschreibung hervor.

Es zeigen
- Figur 1: eine perspektivische Zusammenstellung der erfindungsgemäßen Vorrichtung mit in zwei Reihen von Öffnungen eingesteckten Anschlußstücken und einem Bauteil - z. B. einem Gehäuse einer Magnetventilbaugruppe -, dessen fluidische Anschlüsse mit den Anschlußstücken fluidisch kontaktiert sind,
- Figur 2: eine auseinandergezogene perspektivische Darstellung der Halteplatte ohne Anschlußstücke und des zugehörigen U-förmigen Sicherungsschiebers, in welcher die Halteplatte im Vergleich zu Figur 1 um 180° um ihre Längsachse gedreht ist,
- Figur 3: eine Schnittansicht einer der Öffnungen der Halteplatte zur Aufnahme eines Leitungs-Anschlußstückes mit einem eingesteckten Leitungs-Anschlußstück,
- Figur 4: einen Querschnitt durch am Sicherungsschieber vorgesehene Führungs- und Verbindungselemente in Beziehung zu korrespondierenden Führungs- und Verbindungsmitteln des Bauteils aus Figur 1 in auseinandergezogener Darstellung,
- Figur 5: eine Teilschnitt-Seitenansicht der Halteplatte, des Sicherungsschiebers und des Bauteils ohne Anschlußstücke, wobei in einem Ausschnitt die Schnittansicht aus Figur 4 mit in verriegelndem Eingriff befindlichen Verbindungselementen des Sicherungsschiebers und Verbindungsmitteln des Bauteils wiederaufgenommen ist,
- Figur 6: eine Schnittansicht einer Variante, in der ein linealartiger Sicherungsschieber zur Festlegung von in zwei Reihen von Öffnungen eingesteckten Anschlußstücken verwendet ist, analog zu Figur 3.

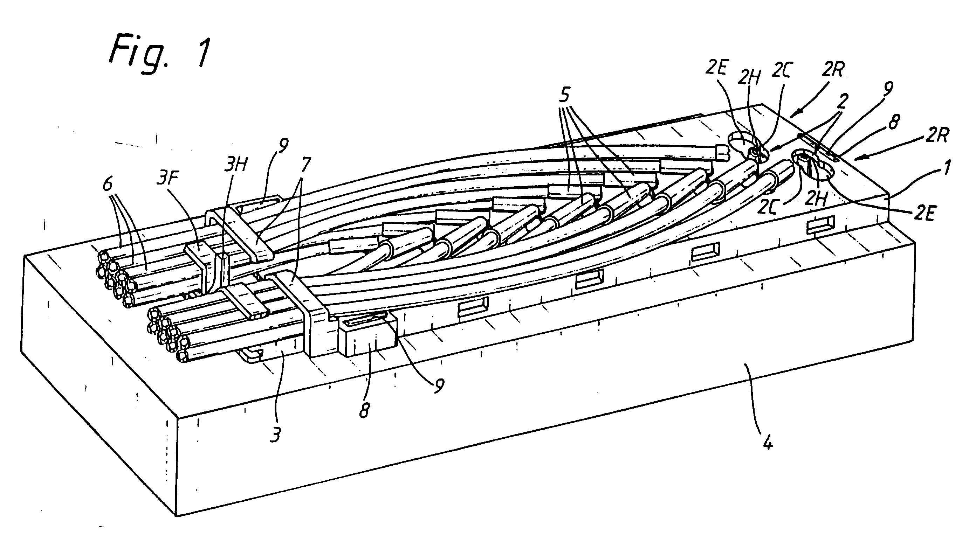

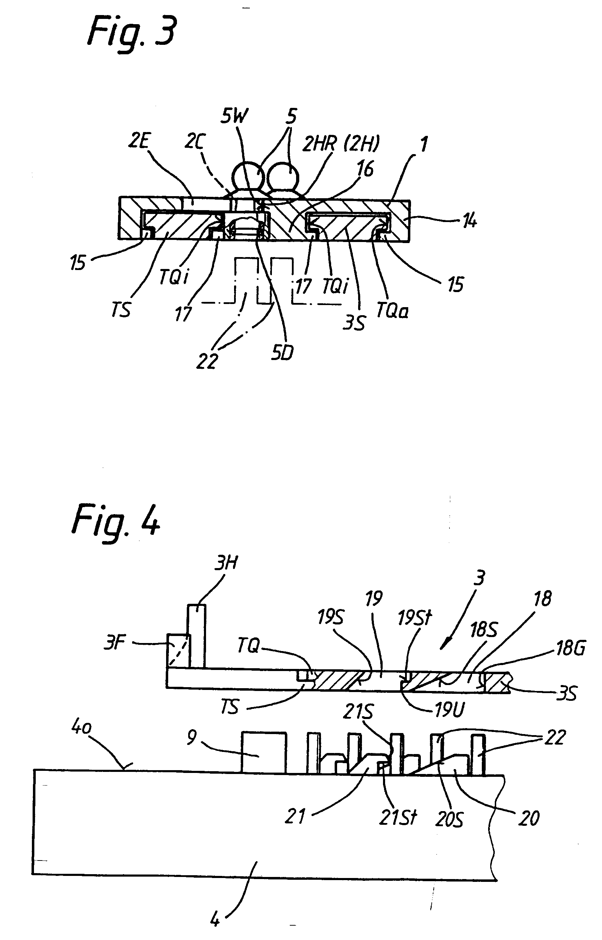

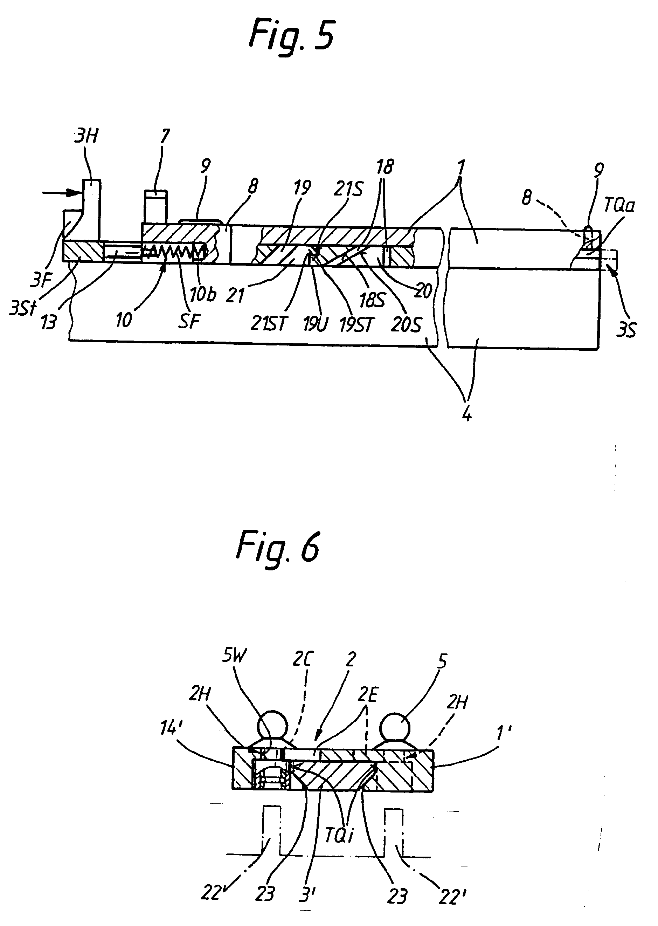

In **Figur 1** ist eine Halteplatte 1 mit Öffnungen 2 zusammen mit einem Sicherungsschieber 3 auf einem Bauteil 4, z. B. einem Gehäuse einer Magnetventilbaugruppe, in später noch beschriebener Weise (Figuren 4 und 5) befestigt. Die Öffnungen 2 sind zur Aufnahme je eines aus einer Vielzahl von Anschlußstücken 5 vorgesehen, die ihrerseits mit je einer Leitung 6 fest verbunden sind. Zwei Öffnungen 2 sind frei, um deren unrunde Form zu zeigen, die aus einem zur axialen Einführung der Anschlußstücke 5 vorgesehenen Einführteil 2E mit größerer lichter Weite und einem Halteteil 2H mit kleinerer lichter Weite gebildet wird, wobei im Übergangsbereich zwischen jedem Einführteil 2E und dem Halteteil 2H eine Engstelle 2C vorgesehen ist, deren lichte Weite, quer zur Längserstreckung bzw. größten lichten Weite der Öffnung 2 gemessen, geringfügig kleiner als die lichte Weite des jeweiligen Halteteils 2H ist. Unter Überdrückung dieser Engstelle können die Anschlußstücke 5 in den Halteteil 2H quer zu ihrer Einführrichtung eingeclipst werden.
Alle Öffnungen 2 haben hier gleiche Abmessungen, jedoch ist es selbstverständlich möglich, in einer Halteplatte Öffnungen für Anschlußstücke verschiedener Außendurchmesser vorzusehen und letztere mittels eines einzigen Sicherungsschiebers festzulegen.

An die Halteplatte 1 sind Flügel 7 angeformt, die die Leitungen 6 gebündelt halten. Ähnliche Flügel 3F sind auch an den Sicherungsschieber 3 neben einer Handhabe 3H angeformt.
An die Halteplatte 1 sind außerdem Schächte 8 angeformt, in welche an das Bauteil 4 bzw. an dessen Oberseite 4o angeformte Codiernasen 9 einführbar sind. Diese Lage-Codiermittel 8 und 9 schaffen eine eindeutige formschlüssige Vorgabe der Montagelage der Halteplatte 1 auf dem Bauteil 4; beim Aufstecken der Halteplatte 1 auf das Bauteil 4 führen sie die Halteplatte 1 senkrecht zur Oberseite 4o des Bauteils 4.

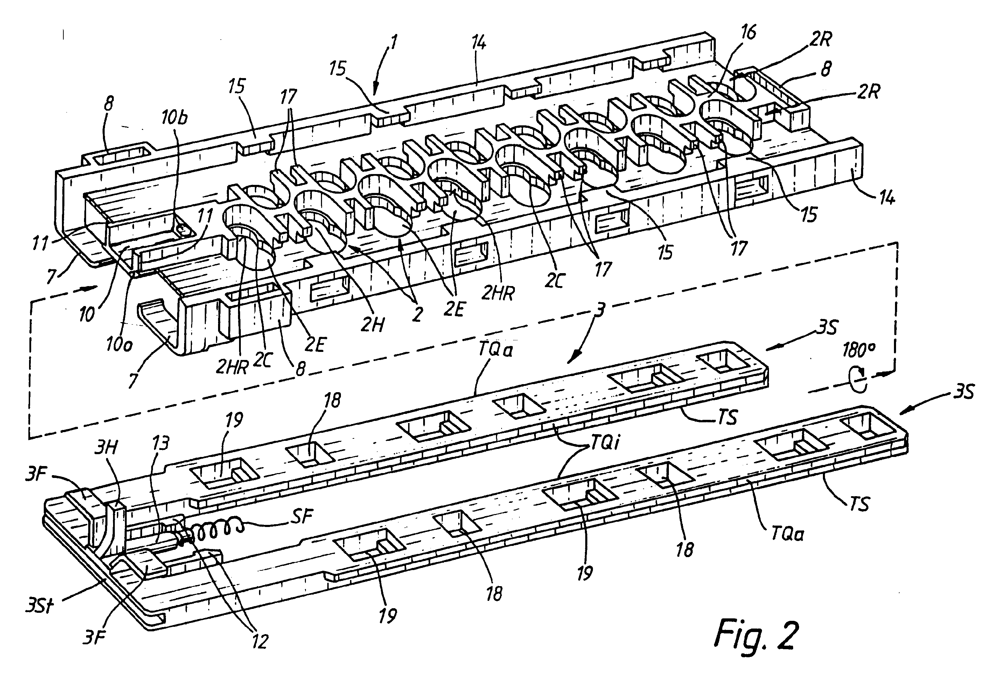

**Figur 2** zeigt perspektivisch die Oberseite des Sicherungsschiebers 3 und die Unterseite der gegenüber ihrer Darstellung in Figur 1 um 180° um ihre Längsachse gedrehten Halteplatte 1. Ersichtlich sind die Öffnungen 2 der Halteplatte 1 in zwei parallel zueinander verlaufenden Reihen 2R mit gleichmäßigen Abständen angeordnet. Innerhalb dieser Reihen 2R sind alle Öffnungen 2 gleich orientiert, d. h. alle Einsteckteile 2E bzw. Halteteile 2H weisen jeweils in dieselbe Richtung, wobei die größte lichte Weite aller Öffnungen 2 rechtwinklig zur Längsachse der Halteplatte und zur durch gestrichelte Pfeile angedeuteten Schieberichtung des Sicherungsschiebers 3 liegt. Deutlich wird hier auch, daß die Halteteile 2H jeweils einen Rand 2HR haben, der die lichte Weite der Halteteile 2H bestimmt. Seine Zweckbestimmung wird später (Figur 3) noch beschrieben.

Die beiden Reihen 2R sind indessen gegensinnig zueinander orientiert, d. h. die Einsteckteile 2E aller Öffnungen 2 liegen mehr zum jeweiligen Außenrand der Halteplatte 1 hin, während die Halteteile 2H aller Öffnungen 2 zur Längsmittellinie der Halteplatte 1 hin weisen. Entsprechend ist die Schieberichtung der Anschlußstücke 5 beim Einschieben in einen Halteteil 2H in beiden Reihen gegenläufig konvergierend.
Außerdem sind die Öffnungen 2 beider Reihen 2R gegeneinander im Längsverlauf der Reihen versetzt angeordnet. Dies hat den Vorteil, daß die Längsachsen der beiden Reihen 2R einander stärker angenähert werden können, als wenn sich die Öffnungen 2 jeweils gegenüber lägen.

Die langgestreckt rechteckige Halteplatte 1 weist an einer Querseite - der Einsteckseite des Sicherungsschiebers 3 - eine wannenartige Ausnehmung 10 auf, die an einer Seite 10o bis zum Boden offen ist. Beidseits außen der Seite 10o ist je eine Rastnase 11 angeformt. Die der offenen Seite 10o gegenüberliegende Seite der Ausnehmung ist mit einer Bohrung 10b versehen.

Zwei Schächte 8 sind an von der planen Fläche der Halteplatte abgewinkelt angeformte Längskanten 14 der Halteplatte 1 angeformt.

Der Sicherungsschieber 3 ist ersichtlich im wesentlichen U-förmig mit zwei längs parallel verlaufenden, unterschiedlich langen Schenkeln 3S, die durch einen Quersteg 3St miteinander verbunden sind. Die beiden erwähnten Flügel 3F des Sicherungsschiebers 3 sind beidseitig einer Handhabe 3H an den Quersteg 3St angeformt, die zum Einleiten manueller Schiebekräfte in den Sicherungsschieber 3 verwendbar ist.

Ebenfalls an den Quersteg 3St sind zwei zwischen den Schenkeln 3S parallel zu diesen verlaufende Rasthaken 12 angeformt, die zusammen mit den Rastnasen 11 der Halteplatte 1 eine Rasteinrichtung zur Sicherung des Sicherungsschiebers 3 in der Halteplatte 1 bilden und bei dessen Einschieben in die Führungen der Halteplatte 1 mit diesen Rastnasen 11 verrastet werden.

Zwischen den parallel laufenden Rasthaken des Sicherungsschiebers 3 ist auch noch an den Quersteg 3St ein Zapfen 13 angeformt, der eine Schraubendruckfeder SF trägt. Diese wird beim Einschieben des Sicherungsschiebers 3 in die Führungen der Halteplatte 1 von der offenen Seite 10o her in die Ausnehmung 10 eingeführt und in dieser durch die der offenen Seite 10o der Ausnehmung 10 gegenüberliegende Bohrung 10b zentriert. Sie wird dabei gespannt und drückt den Sicherungsschieber 3 in die seiner Einschieberichtung entgegengesetzte Richtung, wobei die Rasteinrichtung das weitere Herausgleiten des Sicherungsschiebers 3 aus der Halteplatte 1 verhindert.
Auf diese Weise wird eine begrenzte relative Schiebe-Beweglichkeit des in die Halteplatte 1 eingeschobenen Sicherungsschiebers 3 gegenüber dieser erreicht, die keinen negativen Einfluß auf die Festlegung der Anschlußstücke 5 in den Öffnungen 2 hat, jedoch wie über die Längserstreckung verteilte Ausnehmungen 18 und 19 in den Schenkeln 3S von Belang für die Befestigung des Sicherungsschiebers 3 und der Halteplatte 1 auf dem Bauteil 4 ist, wie später noch eingehend beschrieben wird (Figur 5).

Die Schenkel 3S des Sicherungsschiebers 3 haben einen etwa T-förmigen Querschnitt, wobei der T-Stiel TS nahezu die ganze Breite der Schenkel 3S einnimmt, während der T-Querbalken durch schmale, an den Stiel angeformte Führungsleisten TQa bzw. TQi gebildet wird, deren innenseitige, aufeinander zu weisende - TQi - ihrerseits die geradlinigen Konturen des Sicherungsschiebers 3 zur Festlegung der Anschlußstücke 5 in den Halteteilen 2H der Öffnungen 2 bilden.

Um den Sicherungsschieber 3 aus der gezeigten Position in die Halteplatte 1 bzw. in deren Führungen einzuschieben - in Schieberichtung weisende gestrichelte Pfeile -, muß er bzw. die Halteplatte zunächst um seine / ihre Längsachse um 180° gedreht werden, was rechts am Sicherungsschieber 3 durch einen Rotationspfeil mit Winkelangabe "180°" angedeutet wird.
Die erwähnten Führungen der Halteplatte 1 für den Sicherungsschieber 3 - bzw. genauer für dessen beide Schenkel 3S -, die in der Längsprojektion ebenfalls einen T-Querschnitt in der Art einer auf ihrem Queranteil stehenden T-Nut bilden, sind jeweils außenseitig durch die Längskanten 14 der Halteplatte 1 gebildet, wobei an die Längskanten 14 Vorsprünge 15 von diesen abgewinkelt nach innen ragend angeformt sind.
Innenseitig sind die Führungen der Halteplatte 1 für den Sicherungsschieber 3 durch einen an diese einstückig angeformten Mittelsteg 16 gebildet, der die bereits erwähnte Ausnehmung 10 und deren endseitige Bohrung sowie an seinem anderen Ende einen dritten Schacht 8 enthält und der auch eine zusätzliche Führung für die in die Halteteile 2H der Öffnungen 2 eingeschobenen Anschlußstücke 5 bildet (Figur 3). Zwischen je zwei Öffnungen 2 sind an den Mittelsteg 16 gegen die Vorsprünge 15 der Längskanten 14 weisende Vorsprünge 17 angeformt.
Die Vorsprünge 15/17 sind in beiden parallellaufenden Führungen über den Längsverlauf der Halteplatte 1 paarweise gleichmäßig verteilt, jedoch in den beiden Führungen bezüglich der Längsachse der Halteplatte 1 gegeneinander versetzt angeordnet. Entsprechend sind die Schenkel 3S des Sicherungsschiebers 3 verschieden lang, damit sie gleichzeitig mit den für sie vorgesehenen Paaren von Vorsprüngen 15/17 in Kontakt kommen.

Aus der in **Figur 3** gezeigten Schnittansicht geht deutlicher hervor, wie ein eingestecktes Anschlußstück 5 im Halteteil 2H einer Öffnung 2 der Halteplatte 1 gehaltert und durch eine geradlinige Kontur des eingeschobenen Sicherungsschiebers 3 darin fixiert ist. Der Rand 2HR des Halteteils 2H greift in eine ein Widerlager 5W bildende Ringnut des Anschlußstücks 5 ein, welches unter Überdrückung der Engstelle 2C - nur gestrichelt dargestellt, weil hier unsichtbar - eingeschoben wurde. Das Anschlußstück 5 ist mit einem eingesetzten Dichtring 5D versehen, der auf einen hier nur angedeuteten zylindrischen Anschlußstutzen 22 - siehe Figur 4 - des Bauteils 4 dichtend aufgeschoben werden kann.

Hier sei nochmals darauf hingewiesen, daß mit einer derartigen Aus-führung von Halteplatte 1 und Sicherungsschieber 3 auch eine einzelne Reihe von Steckverbindungen bzw. Anschlußstücken mittels eines linealartigen Sicherungsschiebers in entsprechenden Öffnungen 2 festgelegt werden kann; man braucht sich dazu nur z. B die rechte Hälfte der Halteplatte 1 und den rechten Schenkel 3S des Sicherungsschiebers 3 wegzudenken (vgl. auch Figur 6).
Auch die formschlüssige Führung der T-förmigen Schenkel 3S des Sicherungsschiebers 3 durch die Vorsprünge 15 der Längskanten 14 und die Vorsprünge 17 des Mittelstegs 16 der Halteplatte 1 wird hier klar gezeigt.
Darüber hinaus wird die geringe Bauhöhe der Anordnung aus Sicherungsschieber 3 und Halteplatte 1 offensichtlich.

Auf den Zweck der bereits in Figur 2 gezeigten Ausnehmungen 18 und 19 in den Schenkeln 3S wird im folgenden anläßlich der Beschreibung der **Figuren 4 und 5** eingegangen, aus denen ersichtlich wird, wie der Sicherungsschieber 3 - und damit die mit ihm über die in Figur 3 dargestellten Schiebe-Führungen 14 bis 17 verbundene Halteplatte - auf dem Bauteil 4 befestigt wird.

Ein aufgebrochen dargestellter Teil eines Schenkels 3S des Sicherungsschiebers 3 ist in Figur 4 über einer Seitenansicht des Bauteils 4 von diesem abgehoben gezeichnet. Die Halteplatte ist hier weggelassen.
Die bereits erwähnten, über die Längserstreckung der Schenkel 3S verteilten Ausnehmungen 18 und 19 haben paarweise verschiedene Abmessungen und Innenkonturen. Zur Vereinfachung der Darstellung ist in den Figuren 4 und 5 nur ein Paar von Ausnehmungen 18, 19 aufgebrochen gezeigt; die anderen Ausnehmungen sind natürlich jeweils identisch geformt.
Jedes Paar von Ausnehmungen besteht aus einer trapezförmigen, allgemein als Führungselement zu bezeichnenden Einführungs- bzw. Abdrückausnehmung 18 mit größerem freien Querschnitt,
die eine quer zur Längserstreckung des Schenkels 3S verlaufende gerade Endseite 18G und eine dieser Endseite 18G gegenüberliegende, ebenfalls quer zu der genannten Längserstreckung verlaufende, flach geneigte Endseite bzw. Innenkontur 18S hat,
und aus einer ebenfalls im wesentlichen trapezförmigen, allgemein als Verbindungselement zu bezeichnenden Verriegelungsausnehmung 19 mit kleinerem freien Querschnitt,
die eine quer zur Längserstreckung des Schenkels 3S verlaufende stufige Endseite bzw. Innenkontur 19St mit einer Unterkante 19U und eine der Endseite 19St gegenüberliegende, ebenfalls quer zu der genannten Längserstreckung verlaufende, steil geneigte Endseite 19S hat.
Das Bauteil 4 ist auf seiner im wesentlichen planen Oberseite 4o mit paarweise mit den Ausnehmungen 18 bzw. 19 des Sicherungsschiebers 3 formlich korrespondierenden Ansätzen 20 bzw. 21 versehen, wobei
- die trapezförmigen, allgemein als Führungsmittel zu bezeichnenden Ansätze 20 einseitig gerade und anderseitig mit gleichem Winkel wie die Endseite 18S der Ausnehmungen 18 angeschrägt (Endseite 20S) sind,
- die hakenförmigen, allgemein als Verbindungsmittel zu bezeichnenden Ansätze 21 einseitig gestuft - mit einer Stufe 21St - und anderseitig mit etwa gleichem Winkel wie die Endseite 19S der Ausnehmungen 19 angeschrägt sind.

Oberhalb der Stufe 21St ist noch eine allgemein als Zentriermittel zu bezeichnende Führungsschräge 21S an jeden der hakenförmigen Ansätze 21 angeformt.
Schließlich ragt von der Oberseite 4o des Bauteils 4 noch eine größere Anzahl von Anschlußstutzen 22 ab, mit denen die Anschlußstücke 5 gleichzeitig fluidisch kontaktiert werden können.

Selbstverständlich entspricht die Verteilung der Öffnungen 2 bzw. deren Halteteile 2H in der Halteplatte 1 exakt der Verteilung der Anschlußstutzen 22 auf der Oberseite 4o des Bauteils 4. Durch die bereits erwähnten Codiernasen 9 und Schächte 8 werden die Mittenachsen der Halteteile 2H der Öffnungen 2 der Halteplatte 1 - und damit die Mittenachsen der darin festgelegten Anschlußstücke 5 - exakt auf die Anschlußstutzen 22 des Bauteils ausgefluchtet.

**Figur 5** zeigt eine Teilschnitt-Seitenansicht der mit dem Bauteil 4 verbundenen Anordnung aus Halteplatte und Sicherungsschieber, in der auch die Einbaulage der Druckfeder SF sichtbar wird. Zur Vereinfachung der Figur sind die Leitungs-Anschlußstücke weggelassen.
Wie gestrichelt angedeutet, kann an der rechten Seite der Halteplatte 1 das freie Ende des längeren Schenkels 3S des Sicherungsschiebers 3 austreten; der Sicherungsschieber kann mittels dieses freien Endes manuell in seine gezeigte End- bzw. verriegelte Lage geschoben werden.

### Funktion Verriegelung:

Die Abmessungen, Konturen und Relativpositionen der Ausnehmungen 18 und 19 bzw. der Ansätze 20 und 21 sind so gewählt, daß der Sicherungsschieber 3
- mit der Halteplatte 1 und den festgelegten Anschlußstücken 5 zusammen -
auf das Bauteil 4 aufgesetzt werden kann
- wobei die Codiernasen 9 in die Schächte 8 der Halteplatte 1 eingeführt werden und diese seitlich unverrückbar auf dem Bauteil 4 fixieren -
und bei in etwa senkrecht zur Oberseite 4o des Bauteils 4 gerichteter Druckbelastung geführt durch die allesamt paarweise gleichzeitig in Kontakt tretenden schrägen Endseiten seiner Ausnehmungen 18 und der trapezförmigen Ansätze 20 des Bauteils 4 längs seiner Schiebeführungen in der Halteplatte 1 verschiebbar ist,
- wobei die gesamte Anordnung aus Halteplatte 1, Sicherungsschieber 3 und Anschlußstücken 5 (Figur 3) auf das Bauteil 4 in durch die Codiernasen 9 und die Schächte 8 der Halteplatte 1 geführter Richtung abgesenkt wird.

Die Führungsschrägen 21S der hakenförmigen Ansätze 21 des Bauteils 4 zentrieren im Zusammenwirken mit den Unterkanten 19U der Ausnehmungen 19 des Sicherungsschiebers 3 die Ausnehmungen 18 bzw. 19 bezüglich der Ansätze 20 bzw. 21. Folglich werden die schrägen Endseiten 18S und 20S bei richtig aufgesetzter Halteplatte 1 zwangsläufig aufeinander gedrückt und können bei fortgesetztem Andruck aufeinander abgleiten. Dadurch wird bei dem beschriebenen Aufsetzvorgang eine der Aufsetzbewegung überlagerte, zu dieser senkrechte relative Schiebebewegung zwischen dem Sicherungsschieber 3 und der Halteplatte 1 erzwungen.

Vorzugsweise werden die Passungen zwischen den Ausnehmungen 18 bzw. 19 und den Ansätzen 20 bzw. 21 relativ stramm ausgelegt, so daß die Ansätze satt in den Ausnehmungen gleiten. Die Ausnehmungen 19 sind mit zum Einführen der Ansätze 21 in jedem Fall genügender lichter Weite - gemessen in Schieberichtung des Sicherungsschiebers 3 - dimensioniert.

Die Stufe 21St der trapezförmigen Ansätze 21 korrespondiert formlich negativ mit der stufigen Endseite 19St der Ausnehmung 19. Gegen Ende der erwähnten Verschiebung des Sicherungsschiebers 3 in der Halteplatte 1, die durch die Kraft der gespannten Druckfeder SF unterstützt wird, schnäbeln die stufigen Endseiten 19St der Ausnehmungen 19 mit den ihnen zugewandten Stufen 21St der hakenförmigen Ansätze 21 an. Dadurch wird die gesamte Anordnung 1, 3 und 5 auf der Oberseite 4o des Bauteils 4 vorläufig fixiert.

Es kann vorgesehen werden, daß die dargestellte Endlage des Sicherungsschiebers 3 bezüglich der Ansätze 20 und 21 - mit formschlüssigem Eingriff zwischen den stufigen Endseiten 19St der Ausnehmungen 19 und den ihnen zugewandten Stufen 21St der Ansätze 21 - ausgehend von dem oben erwähnten Anschnäbeln der stufigen Konturen nur durch einen manuell eingeleiteten Zug an der Handhabe 3H oder Druck auf das freie Ende des längeren Schenkels 3S des Sicherungsschiebers 3 erreicht wird. Bei diesem Handgriff kann dem Monteur z. B. durch einen überdrückbaren Rastpunkt die Gewißheit gegeben werden, daß die Verriegelung korrekt hergestellt wurde.

Vorzugsweise kann die Druckfeder aber auch so kräftig bzw. lang bemessen sein, daß sie allein in der Lage ist, den gezeigten verriegelnden Eingriff der stufigen Endseiten 19St der Ausnehmungen 19 des Sicherungsschiebers 3 mit den Stufen 21St der hakenförmigen Ansätze 21 auf dem Bauteil 4 herzustellen.

Dann wird der durch die Feder SF gegen die Rasteinrichtung 11 und 12 gespannte Sicherungsschieber 3 beim Aufsetzen der gesamten Anordnung 1, 3 und 5 auf das Bauteil 4 in zur Oberseite 4o des Bauteils senkrechter Richtung
- wobei die Codiernasen 9 des Bauteils in die Schächte 8 der Halteplatte 1 eintreten -
und Ausübung einer hinreichenden Andruckkraft zunächst mittels der Führungsschrägen 21S und der Unterkanten 19U gegen die Kraft der Druckfeder SF um einen geringfügigen Weg
- der der Projektion der Führungsschrägen 21S auf die Oberseite 4o des Bauteils 4 entspricht -
nach rechts verschoben
- wobei die Ausnehmungen 18 bzw. 19 des Sicherungsschiebers 3 auf die Ansätze 20 bzw. 21 jeweils gleichzeitig und selbsttätig zentriert und anschließend in formschlüssigen Eingriff gebracht werden -,
während die eigentliche Verriegelung dann nach vollständigem Aufsetzen der Halteplatte 1
- die Unterseite der Halteplatte bzw. des Sicherungsschiebers sitzt dann auf der Oberseite des Bauteils auf -
allein durch die Kraft der Feder SF bewirkt wird
- die Stufen der Endseiten 19St der Ausnehmungen 19 werden unter die Stufen 21St der hakenförmigen Ansätze 21 geschoben -.

### Funktion Entriegelung:

Wie in Figur 5 weiters sichtbar, wird beim Schieben des Sicherungsschiebers 3 in seine dargestellte verriegelnde Endlage auf dem Bauteil 4 in jeder Ausnehmung 18 zwischen der schrägen Endseite 18S und der entsprechenden schrägen Seite der Ansätze 20 ein kleiner Luftspalt gebildet.
Zum Entriegeln bzw. Abnehmen der Anordnung 1, 3 und 5 vom Bauteil 4 kann der Sicherungsschieber 3 wiederum mittels der Handhabe 3H (Pfeil) gegen die Kraft der Druckfeder SF relativ zur Halteplatte 1 parallel zur Oberseite 4o des Bauteils 4 geschoben werden. Nach einem kurzen Verschiebeweg, der etwa gleich der Projektion des erwähnten Luftspalts auf die Oberseite 4o ist, laufen die schrägen Endseiten 18S aller Ausnehmungen 18 gleichzeitig an den gegenüber liegenden Schrägen der Ansätze 20 an. Spätestens in dieser Stellung sind die stufigen Endseiten 19St der Ausnehmungen 19 und die Stufen 21St der Ansätze 21 außer Eingriff gebracht, d. h. die formschlüssige Verriegelung ist aufgehoben.
Wird die Verschiebung des Sicherungsschiebers 3 gleichsinnig fortgesetzt, so wird die Anordnung 1, 3 und 5 entlang den genannten Schrägen geführt parallelverschoben, wobei sich schließlich die Ausnehmungen 18 und 19 von den Ansätzen 20 und 21 lösen und die Anschlußstücke 5 von den Stutzen 22 abgezogen werden. Die ganze Anordnung kommt vom Bauteil 4 frei und kann abgenommen werden.

Eine weitere denkbare Variante der erfindungsgemäßen Vorrichtung, die in **Figur 6** ausschnittweise gezeigt ist, hat lediglich einen linealartigen Sicherungsschieber 3′, jedoch auch zwei parallele Reihen von Öffnungen 2 in der Halteplatte 1′, zwischen denen der Sicherungsschieber 3′ verschiebbar durch eine Schwalbenschwanzführung 23 geführt wird.
In dieser Anordnung sind die Öffnungen 2 beider Reihen ebenfalls gegensinnig orientiert, jedoch in Umkehrung der in Figur 3 geschnitten gezeigten Anordnung so, daß die Halteteile 2H der Öffnungen 2 zum Außenrand 14′ der Halteplatte 1′ und die Einführteile 2E der Öffnungen 2 zur Mitte der Halteplatte 1′ hin weisen. Die Anschlußstücke 5 sind in die Öffnungen 2 bzw. deren Halteteile 2H einer Reihe 2R von Öffnungen 2 dieser Anordnung also divergierend bezüglich der anderen Reihe 2R einschiebbar, wobei deren Halterung in den Halteteilen 2H mit der Anordnung nach Figur 3 identisch ist. Alle Einführteile beider Öffnungs-Reihen sind ersichtlich mittels des linealartigen Sicherungsschiebers 3′ teilweise überdeckt, wodurch sich im Ergebnis dieselbe Festlegungsart der Anschlußstücke 5 wie bei der in den anderen Figuren gezeigten Anordnung ergibt.
Rasteinrichtungen und Federvorspannung zwischen dem Sicherungsschieber 3′ und der Halteplatte 1′ sowie deren gemeinsame Festlegung auf einem Bauteil sind nicht gezeigt, werden jedoch in äquivalenter Weise wie vorstehend beschrieben realisiert.

Es versteht sich, daß beliebige formschlüssige geradlinige Schiebeführungen für die verschiedenen Formen von Sicherungsschiebern verwendet werden können; selbstverständlich können auch für den U-förmigen Sicherungsschieber aus Figuren 2 bis 5 zwei Schwalbenschwanz-Führungen analog zu Figur 6 - für jeden Schenkel 3S eine - und für den linealartigen Sicherungsschieber aus Figur 6 eine T-förmige Führung analog zu Figur 3 vorgesehen werden.

Die erfindungsgemäße Vorrichtung findet eine bevorzugte Anwendung in Kraftfahrzeug-Klimaanlagen, deren verschiedene Luftklappen mittels pneumatischer Stellelemente betrieben werden. Die von den Anschlußstücken 5 wegführenden Leitungen sind jeweils mit einem Stellelement verbunden. Über das Bauteil 4, das, wie erwähnt, eine Magnetventilbaugruppe sein kann, werden diese Stellelemente je nach Ventilansteuerung an einen gemeinsamen Über- oder Unterdruckerzeuger angeschlossen; die notwendigen Steckverbindungen können mit der erfindungsgemäßen Vorrichtung in besonders einfacher und zuverlässiger Weise hergestellt werden.

## Patentansprüche

1. Vorrichtung zur Unterstützung der gleichzeitigen Herstellung mehrerer parallellaufender fluidischer Steckverbindungen, enthaltend
- eine Halteplatte (1) mit in wenigstens einer geraden Reihe angeordneten Öffnungen (2), die mit Widerlagern (5W) versehene, axial einführbare Anschlußstücke (5) von Fluidleitungen (6) aufnehmen,
- einen in der Halteplatte entlang einer Schieberichtung verschiebbar führbaren Sicherungsschieber (3) mit wenigstens einer Kontur (TQi), die durch Verschieben des Sicherungsschiebers in eine die Anschlußstücke in den Öffnungen festlegende Stellung bringbar ist,
**gekennzeichnet durch**
- formschlüssige axiale Fixierung der Anschlußstücke (5) in der Halteplatte (1) mittels eines sich wenigstens über einen begrenzten Umfangsabschnitt jeder öffnung (2) erstreckenden und zum Eingriff mit den Widerlagern (5W) der Anschlußstücke (5) ausgebildeten Randes (2HR) der unrund ausgebildeten Öffnungen (2) der Halteplatte (1), wobei dieser Rand (2HR) jeweils ein- und endseitig der größten lichten Weite der unrunden Öffnungen (2) vorgesehen ist, und
- seitliche Festlegung der Anschlußstücke (5) quer zu ihrer Einführrichtung innerhalb der unrunden Öffnungen (2) in der Stellung, in welcher ihre Widerlager (5W) mit dem Rand (2HR) in Eingriff stehen, mittels der wenigstens einen, geradlinig ausgeführten und bezüglich des Randes (2HR) auf der von diesem abgewandten Seite der Anschlußstücke (5) verlaufenden Kontur (TQi) des Sicherungsschiebers (3).

2. Vorrichtung nach Anspruch 1,
**gekennzeichnet durch**
- Ausbildung der unrunden Öffnungen (2) der Halteplatte (1; 1′) mit einem zur axialen Einführung der Anschlußstücke (5) und der Widerlager (5W) vorgesehenen Einführteil (2E) mit größerer lichter Weite und einem mit dem Rand (2HR) mit kleinerer lichter Weite versehenen, im wesentlichen runden, den Einführteil teilweise überlappenden Halteteil (2H),
- axiale Festlegung der Anschlußstücke (5) im Halteteil (2H) der jeweiligen unrunden Öffnung (2) nach ihrem axialen Einführen in den Einführteil (2E),
wozu die Anschlußstücke (5) quer zu ihrer Einführrichtung und in Richtung der größten lichten Weite der jeweiligen unrunden Öffnung (2) geschoben werden und die Widerlager (5W) mit dem Rand (2HR) des Halteteils (2H) in Eingriff gebracht werden,
- winklige Orientierung der größten lichten Weite aller unrunden Öffnungen (2) bezogen auf die Schieberichtung und die wenigstens eine geradlinige Kontur (TQi) des Sicherungsschiebers (3; 3′), und
- wenigstens teilweise Überdeckung der Einführteile (2E) der Öffnungen (2) durch den eingeschobenen Sicherungsschieber (3; 3′),
wodurch die Anschlußstücke (5) mittels der wenigstens einen geradlinigen Kontur (TQ) des Sicherungsschiebers in dem jeweiligen Halteteil (2H) festgelegt werden.

3. Vorrichtung nach Anspruch 1 oder 2,
**dadurch gekennzeichnet,**
daß die größten lichten Weiten aller unrunden Öffnungen (2) einer Reihe (2R), bezogen auf die Schieberichtung des Sicherungsschiebers (3; 3′), gleich orientiert sind.

4. Vorrichtung nach Anspruch 2 oder 3,
**gekennzeichnet durch**
enger als die lichte Weite der Halteteile (2H) der Öffnungen (2) ausgeführte Engstellen (2C) in den Öffnungen (2) im Übergangsbereich von deren Einführteil (2E) zu deren Halteteil (2H), welche ein Einrasten der Anschlußstücke (5) in die Halteteile (2H) der Öffnungen (2) ermöglichen.

5. Vorrichtung nach einem der vorstehenden Ansprüche,
**gekennzeichnet durch**
- wenigstens zwei zur Schieberichtung des Sicherungsschiebers (3) parallel laufende geradlinige Konturen (TQi) des Sicherungsschiebers (3),
- wenigstens eine T-förmige Führung (15, 17) in der Halteplatte (1) zur Führung des Sicherungsschiebers (3), deren Queranteil zur gleitenden Führung der genannten parallel laufenden, geradlinigen Konturen (TQ) des Sicherungsschiebers (3) dimensioniert ist.

6. Vorrichtung nach einem der Ansprüche 1 bis 4,
**gekennzeichnet durch**
- wenigstens zwei zur Schieberichtung des Sicherungsschiebers (3′) parallel laufende geradlinige Konturen (TQi) des Sicherungsschiebers (3′),
- wenigstens eine schwalbenschwanzförmige Führung (23) in der Halteplatte (1′) zur Führung des Sicherungsschiebers (3′), die zur gleitenden Führung der genannten parallel laufenden, geradlinigen Konturen (TQi) des Sicherungsschiebers (3′) dimensioniert ist.

7. Vorrichtung nach einem der vorstehenden Ansprüche, enthaltend zwei parallele Reihen von Öffnungen der Halteplatte,
**gekennzeichnet durch**
- gegensinnige Anordnung der in den unterschiedlichen Reihen (2R) liegenden Öffnungen (2) und
- zwei einander gegenüberliegende geradlinige Konturen (TQi) des Sicherungsschiebers (3; 3′), die bei eingeschobenem Sicherungsschieber (3; 3′) jeweils einer der beiden Reihen (2R) von Öffnungen (2) zugewandt sind.

8. Vorrichtung nach Anspruch 7,
**gekennzeichnet durch**
- gegensinnige Anordnung der in den unterschiedlichen Reihen (2R) liegenden Öffnungen (2) der Halteplatte (1′) in der Weise, daß die Anschlußstücke (5) in den jeweiligen Reihen (2R) bezogen auf die jeweils andere Reihe divergierend in den Halteteil (2H) der Öffnungen (2) einschiebbar sind und
- im wesentlichen linealartige Ausführung des Sicherungsschiebers (3′) mit zwei sich längs dessen Verschieberichtung erstreckenden und in der Halteplatte (1′) geführten geradlinigen Längskanten, welche die die Anschlußstücke (5) festlegenden Konturen (TQi) bilden.

9. Vorrichtung nach Anspruch 7,
**gekennzeichnet durch**
- gegensinnige Anordnung der in den unterschiedlichen Reihen (2R) liegenden Öffnungen (2) in der Weise, daß die Anschlußstücke (5) in den jeweiligen Reihen (2R) bezogen auf die jeweils andere Reihe konvergierend in den Halteteil (2H) der Öffnungen (2) einschiebbar sind und
- im wesentlichen U-förmige Ausführung des Sicherungsschiebers (3) mit zwei sich längs dessen Verschieberichtung erstreckenden und in der Halteplatte (1) geführten Schenkeln (3S), wobei
die geradlinigen Innen- bzw. Außenseiten (Konturen TQi bzw. TQa) jedes dieser Schenkel (3S) jeweils in einer T-förmigen Führung (14 bis 17) der Halteplatte (1) führbar sind und
die Innenseiten der Schenkel (3S) die die Anschlußstücke (5) festlegenden Konturen (TQi) bilden.

10. Vorrichtung nach einem der vorstehenden Ansprüche,
**gekennzeichnet durch**
eine Anschrägung am freien Ende jeder geradlinigen Kontur (TQi) des Sicherungsschiebers (3).

11. Vorrichtung nach einem der vorstehenden Ansprüche,
**gekennzeichnet durch**
eine das Ausschieben des Sicherungsschiebers (3) aus den Führungen der Halteplatte (1) behindernde Rasteinrichtung z. B. Rastnasen (11) und Rasthaken (12).

12. Vorrichtung nach Anspruch 11,
**gekennzeichnet durch**
eine zwischen dem Sicherungsschieber (3) und der Halteplatte (1) angreifende, den eingeschobenen Sicherungsschieber (3) gegen die Rasteinrichtung (11, 12) vorspannende Feder (SF).

13. Vorrichtung nach Anspruch 12,
**gekennzeichnet durch**
einen Zapfen (13) des Sicherungsschiebers (3) und eine Bohrung (10b) der Halteplatte (1) zur Abstützung je eines Endes der Feder (SF).

14. Vorrichtung nach Anspruch 1, 2 oder 7, ferner enthaltend
- ein Bauteil und
- Verbindungselemente zur gemeinsamen Befestigung der Halteplatte und des Sicherungsschiebers mit den eingesteckten und durch den Sicherungsschieber gesicherten Anschlußstücken an dem bei dieser gemeinsamen Befestigung mit den Anschlußstücken fluidisch zu kontaktierenden Bauteil, welches seinerseits mit den Verbindungselementen der Halteplatte korrespondierende Verbindungsmittel aufweist,
**gekennzeichnet durch**
Anordnung der Verbindungselemente z. B. Ausnehmungen (19, 19St) ausschließlich am Sicherungsschieber (3) selbst.

15. Vorrichtung nach Anspruch 14, ferner enthaltend Codierelemente zur Vorgabe einer eindeutigen Montagelage der Halteplatte auf dem Bauteil, in welcher die Öffnungen der Halteplatte exakt auf mit den Anschlußstücken fluidisch zu verbindende, auf einer Oberseite des Bauteils ausmündende fluidische Anschlüsse des Bauteils ausgefluchtet sind,
**gekennzeichnet durch**
- einstückig an die Halteplatte (1) bzw. an das Bauteil (4) angeformte Codierelement z. B. Schächte (8) bzw. Codiernasen (9) in formschlüssig korrespondierender und steckbarer Ausführung, wobei mittels der Codierelemente (8, 9)
- die Mittenachsen der Halteteile (2H) der Öffnungen (2) auf die Mittenachsen der Anschlüsse (22) des Bauteils ausgefluchtet werden und
- die Halteplatte (1) beim Aufsetzen auf das Bauteil (4) senkrecht zu dessen Oberseite (40) geführt wird.

16. Vorrichtung nach Anspruch 14 oder 15,
**gekennzeichnet durch**
mindestens je eine stufige Kontur (19St) an mindestens einem Verbindungselement z. B. Ausnehmung (19) des Sicherungsschiebers (3) und je eine mit dieser stufigen Kontur (19St) formlich negativ korrespondierende stufige Kontur (21St) an je einem Verbindungsmittel z. B. Ansatz (21) des Bauteils (4),
mittels welcher stufigen Konturen (19St bzw. 21St) eine Verriegelung des in der Halteplatte (1) geführten Sicherungsschiebers (3) auf dem Bauteil (4) gegen Abziehen der Halteplatte mit den eingesteckten Anschlußstücken (5) von dem Bauteil (4) herstellbar ist.

17. Vorrichtung nach Anspruch 15 oder 16,
**gekennzeichnet durch**
- Anordnung von Führungselementen z. B. Ausnehmungen (18), Schrägen (18S) am Sicherungsschieber (3) und
- Anordnung von mit den Führungselementen am Sicherungsschieber (3) korrespondierenden Führungsmitteln z. B. Ansätze (20), Schrägen (20S) am Bauteil (4),
die beim durch die Codierelemente (8, 9) geführten Aufsetzen der Halteplatte (1) auf das Bauteil (4) eine simultane Relativbewegung zwischen dem Sicherungsschieber (3) und der Halteplatte (1) in Richtung auf eine verriegelnde Verbindung des Sicherungsschiebers (3) mit dem Bauteil (4) über Verbindungselemente (19) bzw. Verbindungsmittel (21) erzwingen.

18. Vorrichtung nach Anspruch 17,
**gekennzeichnet durch**
- Ausführung der Führungselemente des Sicherungsschiebers (3) als wenigstens zwei über dessen Längserstreckung verteilte trapezförmige Ausnehmungen (18) mit wenigstens je einer schrägen Endseite (18S),
- Ausführung der Führungsmittel des Bauteils (4) als wenigstens zwei, mit je einer der Ausnehmungen (18) des Sicherungsschiebers (3) formlich korrespondierende Ansätze (20) am Bauteil (4) mit ebenfalls je einer schrägen Seite (20S).

19. Vorrichtung nach den Ansprüchen 16 und 18,
**gekennzeichnet durch**
Anordnung der schrägen Endseiten (18S) der Ausnehmungen (18) und der korrespondierenden schrägen Endseiten (20S) der Ansätze (20) in dem Sinn, daß
- beim Aufsetzen der Halteplatte (1) auf das Bauteil (4) in durch die Codierelemente (8, 9) vorgegebener Lage und bei Ausübung einer auf das Bauteil (4) gerichteten Kraft auf die Halteplatte (1)
- eine Relativbewegung des Sicherungsschiebers (3) bezüglich der Halteplatte (1) und
- wenigstens anschnäbelnde mechanische Kontaktierung der jeweiligen korrespondierenden stufigen Konturen (19St bzw. 21St) der Verbindungselemente z. B. Ausnehmungen (19) bzw. der Verbindungsmittel z. B. Ansätze (21)
erzwungen wird.

20. Vorrichtung nach Anspruch 19,
**gekennzeichnet durch**
eine Handhabe (3H) an dem Sicherungsschieber (3) zur Einleitung von Schiebekräften in diesen, mittels deren
- die jeweiligen korrespondierenden stufigen Konturen (19St bzw. 21St) der Verbindungselemente z. B. Ausnehmungen (19) bzw. der Verbindungsmittel z. B. Ansätze (21) außer Eingriff bringbar und
- der Sicherungsschieber (3) gemeinsam mit der Halteplatte (1) über die schrägen Seiten (18S) der Ausnehmungen (18) und die korrespondierenden schrägen Seiten (20S) der Ansätze (20) von dem Bauteil (4) unter gleichzeitiger fluidischer Trennung der Anschlußstücke (5) von den fluidischen Anschlüssen (22) des Bauteils (4) abdrückbar ist.

21. Vorrichtung nach den Ansprüchen 12 und 19,
**gekennzeichnet durch**
wenigstens ein an das Bauteil (4) angeformtes Zentriermittel z. B. Führungsschrägen (21S), welches im Zusammenwirken mit wenigstens einer Kontur z. B. Unterkante (19U) des Sicherungsschiebers beim Aufsetzen der Halteplatte (1) auf das Bauteil (4) eine gegen die Kraft der Feder (SF) gerichtete, kurzhubige Relativbewegung des Sicherungsschiebers (3) weg von der Rasteinrichtung (11, 12) erzwingt,
mit welcher die Ausnehmungen (18 bzw. 19) des Sicherungsschiebers (3) zwangsläufig und selbsttätig auf die mit ihnen korrespondierenden Ansätze (20 bzw. 21) des Bauteils (4) zentriert werden.

22. Vorrichtung nach Anspruch 3,
**dadurch gekennzeichnet,**
daß die größten lichten Weiten aller unrunden Öffnungen (2) einer Reihe (2R) gleichsinnig rechtwinklig zu der Schieberichtung des Sicherungsschiebers (3; 3′) orientiert sind.

## Claims

1. Apparatus for supporting the simultaneous establishment of a plurality of parallel, fluid plug connections, containing
- a holding plate (1) having apertures (2) which are arranged in at least one straight row and receive junction pieces (5) of fluid lines (6) which are provided with abutments (5W) and can be inserted axially,
- a securing slide (3) which can be guided displaceably along one slide direction in the holding plate and has at least one contour (TQi) which, by displacing the securing slide, can be brought into a position fastening the junction pieces in the apertures,
characterized by
- positive-fit axial fixing of the junction pieces (5) in the holding plate (1) by means of an edge (2HR) of the apertures (2) of non-round construction of the holding plate (1), which edge extends at least over a limited circumferential section of each aperture (2) and is constructed so as to engage with the abutments (5W) of the junction pieces (5), said edge (2HR) being provided in each case on one side and at the end of the greatest inside diameter of the non-round apertures (2), and
- lateral fastening of the junction pieces (5) transversely to their insertion direction within the non-round apertures (2) in the position in which their abutments (5W) are in engagement with the edge (2HR) by means of the at least one contour (TQi) of the securing slide (3), which contour is of straight design and extends in relation to the edge (2HR) on the side of the junction pieces (5) facing away from said edge.

2. Apparatus according to Claim 1, characterized by
- construction of the non-round apertures (2) of the holding plate (1; 1′) having an insertion part (2E), provided for axial insertion of the junction pieces (5) and the abutments (5W), of greater inside diameter and having a holding part (2H) which is provided with the edge (2HR) of smaller inside diameter, is essentially round and partially overlaps the insertion part,
- axial fastening of the junction pieces (5) in the holding part (2H) of the respective non-round aperture (2) after their axial insertion in the insertion part (2E),
for which purpose the junction pieces (5) are pushed transversely to their insertion direction and in the direction of the greatest inside diameter of the respective non-round aperture (2) and the abutments (5W) are brought into engagement with the edge (2HR) of the holding part (2H),
- angular orientation of the greatest inside diameter of all the non-round apertures (2) relative to the slide direction and the at least one straight contour (TQi) of the securing slide (3; 3′), and
- at least partial covering of the insertion parts (2E) of the apertures (2) by the pushed-in securing slide (3; 3′),
by which means the junction pieces (5) are fastened in the respective holding part (2H) by means of the at least one straight contour (TQ) of the securing slide.

3. Apparatus according to Claim 1 or 2, characterized in that the greatest inside diameters of all the non-round apertures (2) of one row (2R) are oriented identically relative to the slide direction of the securing slide (3; 3′).

4. Apparatus according to Claim 2 or 3, characterized by narrowings (2C) in the apertures (2) in the transition region from their insertion part (2E) to their holding part (2H), which narrowings are of narrower design than the inside diameter of the holding parts (2H) of the apertures (2) and allow the junction pieces (5) to snap into the holding parts (2H) of the apertures (2).

5. Apparatus according to one of the preceding claims, characterized by
- at least two straight contours (TQi) of the securing slide (3), which contours run parallel to the slide direction of the securing slide (3),
- at least one T-shaped guide (15, 17) in the holding plate (1) for guiding the securing slide (3), the transverse portion of which is dimensioned for the sliding guiding of the said parallel straight contours (TQ) of the securing slide (3).

6. Apparatus according to one of Claims 1 to 4, characterized by
- at least two straight contours (TQi) of the securing slide (3′), which contours run parallel to the slide direction of the securing slide (3′),
- at least one dovetail-shaped guide (23) in the holding plate (1′) for guiding the securing slide (3′), which guide is dimensioned for the sliding guiding of the said parallel straight contours (TQi) of the securing slide (3′).

7. Apparatus according to one of the preceding claims, containing two parallel rows of apertures of the holding plate, characterized by
- reversed arrangement of the apertures (2) lying in the different rows (2R), and
- two opposite straight contours (TQi) of the securing slide (3; 3′), which contours face one of the two rows (2R) of apertures (2) in each case when the securing slide (3; 3′) has been pushed in.

8. Apparatus according to Claim 7, characterized by
- reversed arrangement of the apertures (2) of the holding plate (1′) lying in the different rows (2R) in such a way that the junction pieces (5) in the respective rows (2R) can be pushed into the holding part (2H) of the apertures (2) in a diverging manner relative to the other row in each case and
- essentially ruler-type design of the securing slide (3′) having two straight longitudinal edges which extend longitudinally to the displacement direction of the securing slide, are guided in the holding plate (1′) and form the contours (TQi) fastening the junction pieces (5).

9. Apparatus according to Claim 7, characterized by
- reversed arrangement of the apertures (2) lying in the different rows (2R) in such a way that the junction pieces (5) in the respective rows (2R) can be pushed into the holding part (2H) of the apertures (2) in a converging manner relative to the other row in each case and
- essentially U-shaped design of the securing slide (3) having two limbs (3S) which extend longitudinally to the displacement direction of the securing slide and are guided in the holding plate (1),
it being possible for the straight insides or outsides (contours TQi or TQa) of each of these limbs (3S) to be guided in each case in a T-shaped guide (14 to 17) of the holding plate (1), and
the insides of the limbs (3S) forming the contours (TQi) fastening the junction pieces (5).

10. Apparatus according to one of the preceding claims, characterized by a sloping surface at the free end of each straight contour (TQi) of the securing slide (3).

11. Apparatus according to one of the preceding claims, characterized by a catch device, for example catch projections (11) and catch hooks (12), which prevents the securing slide (3) from being pushed out of the guides of the holding plate (1).

12. Apparatus according to Claim 11, characterized by a spring (SF) which acts between the securing slide (3) and the holding plate (1) and prestresses the pushed-in securing slide (3) against the catch device (11, 12).

13. Apparatus according to Claim 12, characterized by a pin (13) of the securing slide (3) and a borehole (10b) of the holding plate (1) for supporting one end of the spring (SF) in each case.

14. Apparatus according to Claim 1, 2 or 7, furthermore containing
- a component and
- connection elements for the joint attachment of the holding plate and the securing slide with the junction pieces, which have been plugged in and secured by the securing slide, to a component which, with this joint attachment with the junction pieces, is to be contacted fluidically and which, in turn, has connection means corresponding to the connection elements of the holding plate,
characterized by the connection elements, for example recesses (19, 19St), being arranged solely on the securing slide (3) itself.

15. Apparatus according to Claim 14, furthermore containing coding elements to specify an unambiguous assembly position of the holding plate on the component, in which position the apertures of the holding plate are exactly aligned on fluid connectors of the component which are to be connected fluidically to the junction pieces and open out on an upper side of the component, characterized by
- coding elements, for example shafts (8) or coding projections (9), moulded integrally onto the holding plate (1) or onto the component (4), in a design which corresponds to the positive fit and can be plugged, in which case by means of the coding elements (8, 9)
- the mid-axes of the holding parts (2H) of the apertures (2) are aligned on the mid-axes of the connectors (22) of the component and
- when the holding plate (1) is placed on the component (4) it is guided perpendicular to the upper side (4o) of said component.

16. Apparatus according to Claim 14 or 15, characterized by in each case at least one stepped contour (19St) on at least one connection element, for example recess (19) of the securing slide (3) and in each case one stepped contour (21St) corresponding negatively in shape to this stepped contour (19St) on each connection means, for example shoulder (21), of the component (4),
by means of which stepped contours (19St or 21St) a locking of the securing slide (3), guided in the holding plate (1), on the component (4) can be produced against the holding plate with the plugged-in junction pieces (5) being pulled off from the component (4).

17. Apparatus according to Claim 15 or 16, characterized by
- guide elements, for example recesses (18), slopes (18S) being arranged on the securing slide (3) and
- guide means, for example shoulders (20), slopes (20S), corresponding to the guide elements on the securing slide (3), being arranged on the component (4),
which enforce a simultaneous relative movement between the securing slide (3) and the holding plate (1) when the holding plate (1) is placed on the component (4), guided by the coding elements (8, 9), in the direction of a locking connection of the securing slide (3) to the component (4) via connection elements (19) or connection means (21).

18. Apparatus according to Claim 17, characterized by
- the guide elements of the securing slide (3) being designed as at least two trapezoidal recesses (18) distributed over the longitudinal extension of said securing slide and each having at least one sloping end side (18S),
- the guide means of the component (4) being designed as at least two shoulders (20) on the component (4), which shoulders correspond in shape to one of the recesses (18) in each case of the securing slide (3) and likewise each have a sloping side (20S).

19. Apparatus according to Claims 16 and 18, characterized by the sloping end sides (18S) of the recesses (18) and the corresponding sloping end sides (20S) of the shoulders (20) being arranged in such a way that
- when the holding plate (1) is placed on the component (4) in the position specified by the coding elements (8, 9) and when a force directed onto the component (4) is exerted on the holding plate (1),
- a relative movement of the securing slide (3) in relation to the holding plate (1) and
- at least abutting mechanical contacting of the respective corresponding stepped contours (19St or 21St) of the connection elements, for example recesses (19) or the connection means for example shoulders (21)
are enforced.

20. Apparatus according to Claim 19, characterized by a handle (3H) on the securing slide (3) for introducing pushing forces into the latter, by means of which
- the respective corresponding stepped contours (19St or 21St) of the connection elements, for example recesses (19) or the connection means, for example shoulders (21) can be brought out of engagement and
- the securing slide (3) together with the holding plate (1) can be pushed away from the component (4) via the sloping sides (18S) of the recesses (18) and the corresponding sloping sides (20S) of the shoulders (20) with simultaneous fluidic separation of the junction pieces (5) from the fluid connectors (22) of the component (4).

21. Apparatus according to Claims 12 and 19, characterized by at least one centring means, for example guide slopes (21S) which is moulded onto the component (4) and, in interaction with at least one contour, for example lower edge (19U) of the securing slide enforces a short-stroke relative movement, directed against the force of the spring (SF), of the securing slide (3) away from the catch device (11, 12) when the holding plate (1) is placed on the component (4),
by means of which relative movement the recesses (18 or 19) of the securing slide (3) are inevitably and automatically centred on their corresponding shoulders (20 or 21) of the component (4).

22. Apparatus according to Claim 3, characterized in that the greatest inside diameters of all the non-round apertures (2) of one row (2R) are oriented in the same direction at right angles to the slide direction of the securing slide (3; 3′).

## Revendications

1. Dispositif pour assister la fabrication simultanée de plusieurs raccords fluidiques à enfichage, parallèles, contenant
- une plaque de support (1) comportant des ouvertures (2) disposées au moins suivant une rangée rectiligne et qui logent des éléments de raccordement (5), qui sont pourvus de butées (5W) et peuvent être insérés axialement, de tuyaux (6) pour fluide,
- un curseur de sécurité (3) qui peut être introduit dans la plaque de retenue en étant déplaçable dans une direction de translation et possède au moins un contour (TQi) qui, sous l'effet du déplacement du curseur de sécurité, peut être amené dans une position fixant les éléments de raccordement dans les ouvertures,
caractérisé par
- une fixation axiale, selon une liaison par formes complémentaires, des éléments de raccordement (5) dans la plaque de retenue (1) au moyen d'un bord (2HR), qui s'étend au moins sur une section périphérique limitée de chaque ouverture (2) et est agencé de manière à venir en contact avec les butées (5W) des éléments de raccordement (5), des ouvertures (2) réalisées avec une forme non circulaire de la plaque de retenue (1), ce bord (2HR) étant prévu sur le côté entrée et sur le côté d'extrémité de la zone de passage la plus large des ouvertures non circulaires (2),
- une fixation latérale des éléments de raccordement (5) transversalement par rapport à leur direction d'insertion à l'intérieur des ouvertures non circulaires (2) dans la position, dans laquelle leurs butées (5W) sont appliquées contre le bord (2HR), à l'aide d'au moins un contour (TQi) du curseur de sécurité (3) qui est réalisé avec une forme rectiligne et s'étend sur le côté des éléments de raccordement (5), qui est situé à l'opposé du bord (2HR).

2. Dispositif selon la revendication 1, caractérisé par
- la réalisation des ouvertures non circulaires (2) de la plaque de retenue (1;1′) avec une partie d'introduction (2E), qui est prévue pour l'insertion axiale des éléments de raccordement (5) et des butées (5W) et possède la largeur la plus importante, et une partie de retenue essentiellement circulaire (2H), qui comporte le bord (2HR) correspondant à la largeur la plus faible et chevauchant partiellement la partie d'introduction,
- la fixation axiale des éléments de raccordement (5) dans la partie de retenue (2H) de l'ouverture non circulaire respective (2) après son introduction axiale dans la partie d'introduction (2E),
les éléments de raccordement (5) étant à cet effet repoussés transversalement par rapport à leur direction d'insertion et dans la direction de largeur maximale de l'ouverture non circulaire respective (2), tandis que les butées (5W) sont amenées en contact avec le bord (2HR) de la partie de retenue (2H),
- une orientation oblique de la droite correspondant à la largeur maximale de toutes les ouvertures non circulaires (2) par rapport à la direction de translation et à au moins un contour rectiligne (TQi) du curseur de sécurité (3,3′), et
- au moins un recouvrement partiel des parties d'introduction (2E) des ouvertures (2) par le curseur de sécurité inséré (3;3′),
les éléments de raccordement (5) étant fixés dans la partie de retenue respective (2H), à l'aide d'au moins un contour rectiligne (TQ) du curseur de sécurité.

3. Dispositif selon la revendication 1 ou 2, caractérisé par le fait que les droites étendues de largeur maximale de toutes les ouvertures non circulaires (2) d'une rangée (2A) possède la même orientation par rapport à la direction de translation du curseur de sécurité (3;3′).

4. Dispositif selon la revendication 2 ou 3, caractérisé par des parties rétrécies (2C) agencées de manière à définir la zone la plus large des parties de retenue (2H) des ouvertures (2), dans les ouvertures (2) dans la zone de transition entre leur partie d'introduction (2E) et leur partie de retenue (2H) et qui permettent un encliquetage des éléments de raccordement (2) dans les parties de retenue (2H) des ouvertures (2).

5. Dispositif selon l'une des revendications précédentes, caractérisé par
- au moins deux contours rectilignes (TQi) du curseur de sécurité (3), qui s'étendent parallèlement à la direction de translation de ce curseur,
- au moins un guide en forme de T (15, 17) ménagé dans la plaque de retenue (1) pour le guidage du curseur de sécurité (3) et dont la partie transversale est dimensionnée de manière à réaliser le guidage avec glissement desdits contours rectilignes parallèles (TQ) du curseur de sécurité (3).

6. Dispositif selon l'une des revendications 1 à 4, caractérisé par
- au moins deux contours rectilignes (TQi) du curseur de sécurité (3′), qui s'étendent parallèlement à la direction de translation de ce curseur,
- au moins un guide en forme de queue d'aronde (23) ménagé dans la plaque de retenue (1′) pour guider le curseur de sécurité (3′) et qui est dimensionné pour permettre le guidage avec glissement desdits contours rectilignes parallèles (TQi) du curseur de sécurité (3′).

7. Dispositif selon l'une des revendications précédentes, contenant deux rangées parallèles d'ouvertures ménagées dans la plaque de retenue, caractérisé par
- une disposition en des sens opposés des ouvertures (2) situées dans les différentes rangées (2R), et
- deux contours rectilignes opposés (TQi) du curseur de sécurité (3; 3′), qui, lorsque le curseur de sécurité (3; 3′) est inséré, sont tournés respectivement vers l'une des deux rangées (2R) d'ouvertures (2).

8. Dispositif selon la revendication 7, caractérisé par
- une disposition en des sens opposés des ouvertures (2) de la plaque de retenue (1′), qui sont situées dans les différentes rangées (2R), de telle sorte que les éléments de raccordement (5) peuvent être insérés dans les rangées respectives (2R) de manière à diverger par rapport à l'autre rangée respective, dans la partie de retenue (2H) des ouvertures (2), et
- une réalisation sensiblement en forme de règle du curseur de sécurité (3′) comportant des bords longitudinaux rectilignes, qui s'étendent dans la direction d'insertion du curseur et sont guidés dans la plaque de retenue (1′) et qui forment des contours (TQi) fixant les éléments de raccordement (5).

9. Dispositif selon la revendication 7, caractérisé par
- une disposition en des sens opposés des ouvertures (2) situées dans les différentes rangées (2E) de telle sorte que les éléments de raccordement (5) peuvent être insérés dans les rangées respectives (2A), d'une manière qui converge par rapport à l'autre rangée respective, dans la partie de retenue (2H) des ouvertures (2), et
- une réalisation sensiblement en forme de U du curseur de sécurité (3) comportant deux branches (3S), qui s'étendent dans la direction de translation de ce curseur et sont guidées dans la plaque de retenue (1), les côtés intérieurs ou les côtés extérieurs rectilignes (contours TQi ou TQa) de chacune de ces branches de chacune de ces branches (3S) pouvant être guidés respectivement dans un guide en forme de T (14 à 17) de la plaque de retenue (1), et
des côtés intérieurs des branches (3S) formant les contours (TQi) fixant les éléments de raccordement (5).

10. Dispositif selon l'une des revendications précédentes, caractérisé par un biseautage au niveau de l'extrémité de chaque contour rectiligne (TQi) du curseur de sécurité (3).

11. Dispositif selon l'une des revendications précédentes, caractérisé par un dispositif d'encliquetage, par exemple des ergots d'encliquetage (11) et des crochets d'encliquetage (12), qui empêche la sortie du curseur de sécurité (3) hors des guides de la plaque de retenue (1).

12. Dispositif selon la revendication 11, caractérisé par un ressort (SF), qui est monté entre le curseur de sécurité (3) et la plaque de retenue (1) et précontraint le curseur de sécurité inséré (3), contre le dispositif d'encliquetage (11, 12).

13. Dispositif selon la revendication 12, caractérisé par un téton (13) du curseur de sécurité (3) et un perçage (10b) de la plaque de retenue (1), servant à supporter respectivement une extrémité du ressort (SF).

14. Dispositif selon la revendication 1, 2 ou 7, contenant en outre
- un composant, et
- des éléments de raccordement pour la fixation commune de la plaque d'encliquetage et du curseur de sécurité avec les éléments de raccordement enfichés et bloqués par le curseur de sécurité, sur le composant avec lequel un contact de transfert fluidique doit être établi lors de cette fixation commune avec les éléments de raccordement et qui pour sa part comporte des moyens de raccordement qui correspondent aux éléments de raccordement de la plaque de retenue,
caractérisé par
la disposition des éléments de raccordement, par exemple des évidements (19, 19St), exclusivement dans le curseur de sécurité (3).

15. Dispositif selon la revendication 14, contenant en outre des éléments de codage pour la prédétermination d'une position nette de montage de la plaque de retenue sur le composant, dans laquelle les ouvertures de la plaque de retenue sont alignées de façon précise sur des raccords fluidiques du composant, qui doivent être raccordés fluidiquement aux éléments de raccordement et débouchent dans la face supérieure du composant,
caractérisé par
- un élément de codage, par exemple des logements (8) ou des ergots de codage (9), formé d'un seul tenant sur la plaque de retenue (1) ou sur le composant (4), avec des agencements qui se correspondent pour une liaison par formes complémentaires et peuvent être réunis par enfichage, auquel cas grâce aux éléments de codage (8, 9),
- les axes médians des parties de retenue (2H) des ouvertures (2) sont alignés sur les axes médians des raccords (22) du composant, et
- la plaque de retenue (1) est guidée perpendiculairement à la face supérieure (40) du composant (4), lors de sa mise en place sur ce composant.

16. Dispositif selon la revendication 14 ou 15, caractérisé par
au moins respectivement un contour étagé (19St) prévu sur au moins un élément de jonction, par exemple un évidement (19) du curseur de sécurité (3), et respectivement un contour étagé (21St), qui correspond à l'inverse, du point de vue forme, de ce contour étagé (19St) et est prévu sur respectivement un élément de raccordement, par exemple un appendice saillant (21) du composant (4),
un verrouillage du curseur de séurité (3) guidé dans la plaque de retenue (1) sur le composant (4) contre un retrait de la plaque de retenue avec les éléments de raccordement enfichés (5) du composant (4) pouvant être établi à l'aide desdits contours étagés (19St et 21St).

17. Dispositif selon la revendication 15 ou 16, caractérisé par
- la disposition d'éléments de guidage, par exemple d'évidements (18), de biseaux (18S), sur le curseur de sécurité (3), et
- la disposition de moyens de guidage, qui correspondent aux éléments de guidage disposés sur le curseur de sécurité (3), par exemple des appendices saillants (20), des biseaux (20S), sur le composant (4),
- qui, lors de la mise en place de la plaque de retenue (1) sur le composant (4), avec guidage au moyen des éléments de codage (8, 9), imposent un déplacement relatif simultané entre le curseur de sécurité (3) et la plaque de retenue (1) dans le sens d'une liaison avec verrouillage du curseur de sécurité (3) avec le composant (4) par l'intermédiaire de moyens de raccordement (19) ou de moyens de raccordement (21).

18. Dispositif selon la revendication 17, caractérisé par
- la réalisation des éléments de guidage du curseur de sécurité (3) sous la forme d'au moins deux évidements trapézoïdaux (18) répartis sur l'étendue longitudinale du curseur et comportant au moins respectivement une face d'extrémité oblique (18S),
- la réalisation des moyens de guidage du composant (4) sous la forme de deux appendices saillants (20) dont la forme correspond respectivement à l'un des évidements (18) du curseur de sécurité (3), sur le composant (4) avec également respectivement un côté oblique (20S).

19. Dispositif selon les revendications 16 et 18, caractérisé par la disposition des côtés d'extrémité obliques (18S) des évidements (18) et des côté d'extrémité obliques correspondants (20S) des appendices saillants (20) de telle sorte que
- lors de la mise en place de la plaque de retenue (1) sur le composant (15) dans la position prédéterminée par les éléments de codage (8, 9) et lors de l'application d'une force dirigée vers le composant (4), à la plaque de retenue (1),
- un déplacement relatif du curseur de sécurité (3) par rapport à la plaque de retenue (1), et
- au moins l'établissement d'un contact mécanique avec accrochage réciproque des contours étagés respectivement correspondants (19St et 21St) des éléments de raccordement, par exemple des évidements (19) et des moyens de raccordement, par exemple des appendices saillants (21).
est imposé.

20. Dispositif selon la revendication 19, caractérisé par
- une poignée (3H) située sur le curseur de sécurité (3) pour appliquer des forces de translation à ce curseur, et à l'aide de laquelle
- les contours étagés respectifs correspondants (19St et 21St) des éléments de raccordement, par exemple des évidements (19) et des moyens de raccordement, par exemple des appendices saillants (21), peuvent être dégagés les uns des autres, et
- le curseur de sécurité (3) peut être repoussé, conjointement avec la plaque de retenue (1), par-dessus les côtés obliques (18S) des évidements (18) et des côtés obliques correspondants (20S) des appendices saillants (20) peuvent être repoussés par le composant (4), moyennant une séparation fluidique simultanée des éléments de raccordement (5) à partir des raccords fluidiques (22) du composant (4).

21. Dispositif selon les revendications 12 et 19, caractérisé par au moins un moyen de centrage formé sur le composant (4), par exemple des biseaux de guidage (21S) et qui, en coopération avec au moins un contour, par exemple inférieur (19U) du curseur de sécurité, lors de la mise en place de la plaque de retenue (1) sur le composant (4), impose un déplacement relatif du curseur de sécurité (3) sur une faible course, déplacement qui est dirigé à l'encontre de la force du ressort (SF), à partir du dispositif d'encliquetage (11, 12),
à l'aide duquel les éléments (18, 19) du curseur de sécurité (3) sont centrés d'une manière forcée et automatique sur les appendices saillants (20 et 21) du composant (4), qui leur correspondent.

22. Dispositif selon la revendication 3, caractérisé en ce que les étendues de largeur maximale de toutes les ouvertures non circulaires (2) d'une rangée (2R) sont orientées en des sens opposés perpendiculairement à la direction de translation du curseur de sécurité (3;3′).
